# EUROPEAN PATENT APPLICATION

(11) **EP 4 631 889 A1**
(43) Date of publication of application: **15.10.2025**
(21) Application number: 24766427.9
(22) Date of filing: 05.03.2024
(51) Int. Cl.: B65G 1/04

(54) **WAREHOUSING ROBOT AND WAREHOUSING SYSTEM**

(30) Priority: 07.03.2023 CN 202310248026
(71) Applicant: Hai Robotics Co., Ltd., Shenzhen, Guangdong 518000 (CN)
(72) Inventor: GAO, Peng, Shenzhen, Guangdong 518000 (CN)
(74) Representative: Gulde & Partner
(86) International application number: PCT/CN2024/080078
(87) International publication number: WO 2024/183712

(57) **Abstract**

This application relates to a warehousing robot and a warehousing system. The warehousing robot includes: a mobile base configured to drive the warehousing robot to move on a support surface; a handling device configured to retrieve a storage object from a target storage location of a rack unit or place a storage object on a target storage location; and a climbing assembly including a climbing module and a climbing driving device, where the climbing module includes an upright frame and a first synchronization belt, the upright frame is arranged on the mobile base, the first synchronization belt is arranged on the upright frame and is rotatable relative to the upright frame, the climbing driving device is configured to drive the first synchronization belt to rotate, the first synchronization belt is provided with a plurality of protrusions, and the protrusions are arranged at intervals along an outer periphery of the first synchronization belt, and can abut against the rack unit, to drive the warehousing robot to ascend or descend along with rotation of the first synchronization belt along a height direction of the rack unit. The solutions provided in this application can resolve a problem that when the warehousing robot climbs and is docked with the rack, a dislocation easily occurs when a chain wheel or a gear meshes with a chain or a gear rack.

## Description

### CROSS-REFERENCES

This application claims priority to CN202310248026.7, filed on March 7, 2023, and entitled "WAREHOUSING ROBOT AND WAREHOUSING SYSTEM", which is incorporated herein by reference in its entirety.

### TECHNICAL FIELD

This application relates to the field of warehousing logistics technologies, and in particular, to a warehousing robot and a warehousing system.

### BACKGROUND OF THE INVENTION

A warehousing robot refers to a robot used for operations such as inbound or outbound transportation, sorting, and picking of goods in an indoor environment such as a logistics warehouse and a production warehouse, and is one of core equipment of intelligent logistics.

In a related technology, a warehousing robot can climb a rack longitudinally, to transport goods stored at different heights on the rack. To implement the longitudinal climbing, the warehousing robot usually has a chain wheel or a gear. Correspondingly, the rack is provided with a chain or a gear rack matching the chain wheel or the gear. The chain wheel or the gear is driven to rotate, to implement the longitudinal climbing of the warehousing robot.

However, the manner of driving by using the chain wheel or the gear has a relatively high requirement on matching precision. When the warehousing robot and the rack just begin to be docked, a different chain wheel or gear may not mesh with a corresponding chain or gear rack at the same time, causing a dislocation when the chain wheel or gear meshes with the chain or gear rack.

### SUMMARY OF THE INVENTION

An objective of this application is to provide a warehousing robot and a warehousing system, and to resolve a problem that when the warehousing robot climbs and is docked with a rack, a dislocation easily occurs when a chain wheel or a gear meshes with a chain or a gear rack.

A first aspect of this application provides a warehousing robot, including:
a mobile base, configured to drive the warehousing robot to move on a support surface;
a handling device, configured to retrieve a storage object from a target storage location of a rack unit or place a storage object on a target storage location of a rack unit; and
a climbing assembly, including a climbing module and a climbing driving device, where the climbing module comprises an upright frame and a first synchronization belt, the upright frame is arranged on the mobile base, the first synchronization belt is arranged on the upright frame and is rotatable relative to the upright frame, the climbing driving device is configured to drive the first synchronization belt to rotate, the first synchronization belt is provided with a plurality of protrusions, and the plurality of protrusions are arranged at intervals along an outer periphery of the first synchronization belt; and the protrusions can abut against the rack unit, to drive the warehousing robot to ascend or descend along with rotation of the first synchronization belt along a height direction of the rack unit.

A second aspect of this application provides a warehousing system, including:
a plurality of rack units, where the plurality of rack units are distributed at intervals, an interval region between adjacent rack units forms an aisle. The rack unit includes a plurality of columns distributed at intervals along a length direction of the aisle, and each of the plurality of columns has a plurality of slots arranged along a height direction of the column; and
the warehousing robot described above, where the plurality of protrusions of the warehousing robot are configured to abut against the plurality of slots when the first synchronization belt rotates along a height direction of the rack unit, so that the warehousing robot ascends or descends along the columns.

The technical solutions provided in this application may include the following beneficial effects.

In the warehousing robot in the embodiments of this application, the climbing assembly is abutted with the rack unit through the protrusion on the first synchronization belt, and the first synchronization belt can drive the warehousing robot to ascend or descend when rotating along a height direction of the rack unit. Therefore, a chain wheel or a gear does not need to be used for climbing and driving the warehouse robot. However, the manner of driving and climbing by using a synchronization belt has a relatively low requirement on precision and better compatibility, thereby avoiding a problem that when the warehousing robot is docked with the rack, different chain wheels or gears are not meshed at the same time, and consequently, a high degree of dislocation occurs.

It should be understood that the foregoing general descriptions and the following detailed descriptions are merely for exemplary and explanatory purposes, and cannot limit this application.

### BRIEF DESCRIPTION OF DRAWINGS

The foregoing and other objectives, features, and advantages of this application will become more apparent from the following detailed descriptions of exemplary implementations of this application with reference to the accompanying drawings. In the exemplary implementations of this application, same reference numerals generally represent same components.
FIG. 1 is a schematic three-dimensional diagram of a warehousing system according to an embodiment of this application;
FIG. 2 is a schematic top view of a warehousing system according to an embodiment of this application;
FIG. 3 is a schematic side view of a warehousing system according to an embodiment of this application;
FIG. 4 is a schematic side view of a warehousing system under another perspective according to an embodiment of this application;
FIG. 5 is a schematic structural diagram of a rack unit according to an embodiment of this application;
FIG. 6 is a schematic structural diagram of raising a warehousing robot according to an embodiment of this application;
FIG. 7 is a schematic structural diagram of lowering a warehousing robot according to an embodiment of this application;
FIG. 8 is a schematic structural diagram of a mobile base and a pushing mechanism according to an embodiment of this application;
FIG. 9 is a schematic structural diagram of a climbing module according to an embodiment of this application;
FIG. 10 is a schematic structural diagram of a climbing guide rail according to an embodiment of this application;
FIG. 11 is a schematic structural diagram of a climbing module when climbing along a climbing guide rail according to an embodiment of this application;
FIG. 12 is a sectional view of FIG. 11;
FIG. 13 is a schematic structural diagram of a climbing assembly according to an embodiment of this application;
FIG. 14 is a schematic structural diagram of a pushing mechanism according to an embodiment of this application;
FIG. 15 is a schematic assembly diagram of a connecting shaft, a synchronous reversing mechanism, and a climbing module according to an embodiment of this application;
FIG. 16 is a schematic structural diagram of a lifting mechanism according to an embodiment of this application;
FIG. 17 is a sectional view of a lifting mechanism according to an embodiment of this application;
FIG. 18 is a schematic structural diagram of an upright rod according to an embodiment of this application;
FIG. 19 is a principle diagram of a warehousing robot being lifted by a lifting mechanism according to an embodiment of this application;
FIG. 20 is a schematic structural diagram of a handling device according to an embodiment of this application;
FIG. 21 is a schematic structural diagram of a handling device under another perspective according to an embodiment of this application;
FIG. 22 is a schematic structural diagram of a warehousing robot when transporting a material box according to an embodiment of this application;
FIG. 23 is a schematic structural diagram of a first slide block according to an embodiment of this application;
FIG. 24 is a schematic front view of the first slide block shown in FIG. 23;
FIG. 25 is a schematic structural diagram of a second slide block according to an embodiment of this application;
FIG. 26 is a schematic front side view of the second slide block shown in FIG. 25;
FIG. 27 is a schematic structural diagram of a warehousing robot when a handling device is in an inclined state according to an embodiment of this application;
FIG. 28 is a schematic diagram of a warehousing robot that is used by an operator to directly perform sorting according to an embodiment of this application;
FIG. 29 is a schematic diagram of a warehousing robot being docked with a conveyor according to an embodiment of this application;
FIG. 30 is a schematic side view of a warehousing system according to another embodiment of this application; and
FIG. 31 is a schematic top view of a warehousing system according to another embodiment of this application.

### Reference signs:

100: rack unit; 110, 110L, and 110R: landing column; 120, 120L, and 120R: suspended column; 130: cross beam; 140: support plate; 160: climbing guide rail; 161: slot; 162: groove; 163: edge;
200: warehousing robot;
210: mobile base; 211: driving wheel; 212: driving motor; 213: locating pin; 214: fork positioning pin;
220: handling device; 221: fork body; 222: first slide block; 2221: straight groove; 223: second slide block; 2231: inclined groove; 224: cone sleeve;
230: climbing module; 231: upright frame; 232: first synchronization belt; 234: climbing synchronization wheel; 235: protrusion; 236: climbing guide wheel set; 2361: first guide wheel; 2362: second guide wheel; 2363: third guide wheel; 237: guide bar;
240: pushing mechanism; 241: telescopic arm assembly; 242: guide rod; 243: telescopic finger; 244: telescopic driving member; 245: second synchronization belt; 246: guide sleeve;
250: connecting shaft;
260: synchronous reversing mechanism; 261: third synchronization belt;
270: lifting mechanism; 271: sleeve; 272: upright rod; 2721: gear rack; 2722: void avoiding slot; 2723: positioning hole; 273: lifting gear; 274: position limiting pin; 275: universal wheel;
280: climbing driving device;
300: aisle; 400: material box; 500: conveyor.

### DETAILED DESCRIPTION

The following describes implementations of this application in more detail with reference to the accompanying drawings. Although the accompanying drawings show implementations of this application, it should be understood that this application may be implemented in various forms and should not be limited to the implementations described herein. On the contrary, these implementations are provided to make this application more comprehensive and complete, and can completely convey the scope of this application to a person skilled in the art.

It should be understood that, although terms such as "first", "second" and "third" may be used in this application to describe various information, the information should not be limited to the terms. These terms are merely used to distinguish information of a same type from each other. For example, without departing from the scope of this application, first information may also be referred to as second information, and similarly, the second information may also be referred to as the first information. Therefore, features defined with a "first" and "second" may explicitly or implicitly include one or more of the features. In the description of this application, unless otherwise explicitly and specifically defined, "a plurality of" means two or more.

In the description of this application, it should be understood that orientation or position relationships indicated by terms such as "length", "width", "upper", "lower", "front", "rear", "left", "right", "vertical", "horizontal", "top", "bottom", "inner", and "outer" are based on orientation or position relationships shown in the accompanying drawings, and are used only for ease and brevity of illustration and description of this application, rather than indicating or implying that the mentioned device or element needs to have a specific orientation, and is constructed and operated in the specific orientation, and therefore cannot be understood as a limitation to this application.

Unless otherwise explicitly specified and limited, terms such as "mounted", "linked", "connected", and "fixed" should be understood in a broad sense. For example, it can be a fixed connection, a detachable connection or an integration; it can be a mechanical connection or an electrical connection; it can be a direct connection or an indirect connection through an intermediate medium; and it can be an internal connection between two elements or an interaction between two elements. A person of ordinary skill in the art may understand specific meanings of the foregoing terms in this application according to specific situations.

The following describes the technical solutions in the embodiments of this application in detail with reference to the accompanying drawings.

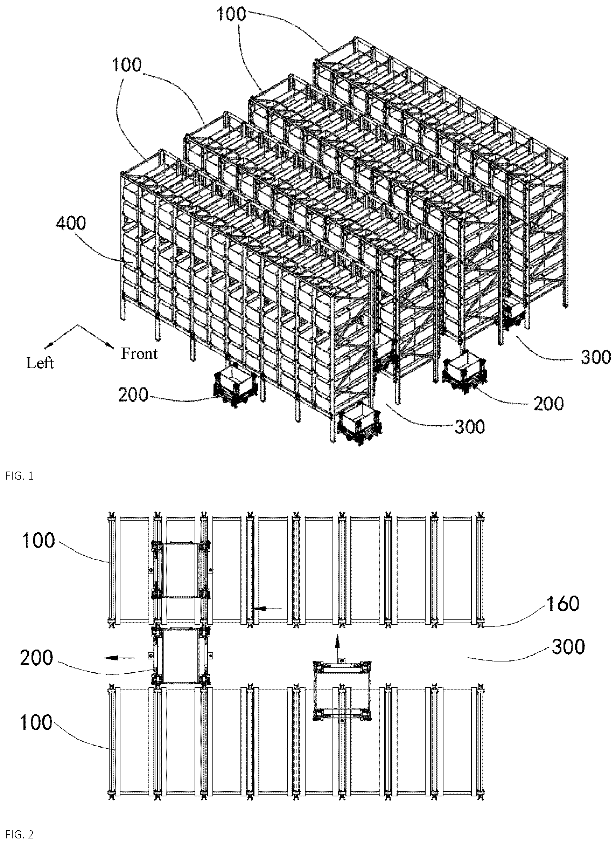

Referring to FIG. 1 to FIG. 5, an embodiment of this application provides a warehousing system, including a plurality of rack units 100 and a warehousing robot 200.

The plurality of rack units 100 are distributed at intervals in a left-right direction, and an interval region between adjacent rack units 100 forms an aisle 300. For ease of understanding and description, in this embodiment, a width direction of the aisle 300 is referred to as a left-right direction, and a length direction of the aisle 300 is referred to as a front-rear direction.

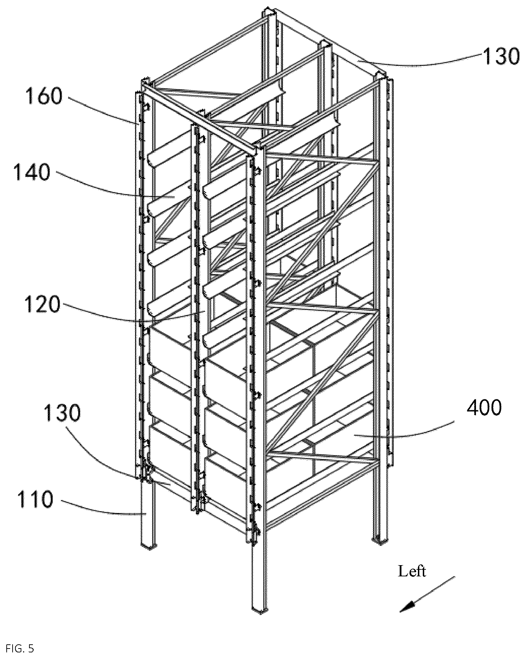

Referring to an example in FIG. 5, a landing column 110 and a suspended column 120 are provided on left and right sides of a rack unit 100. Using a left side of the rack unit 100 as an example, a plurality of landing columns 110 are arranged at intervals along a length direction of the rack unit 100. A lower end of the landing column 110 is arranged on a support surface. Between two adjacent landing columns 110, a suspended column 120 is provided. A lower end of the suspended column 120 is higher than the support surface by a particular distance. A cross beam 130 is provided between two adjacent landing columns 110. The cross beam 130 is further connected to the suspended column 120. An arrangement manner of the landing column 110, the suspended column 120, and the cross beam 130 on a right side of the rack unit 100 is the same as that on the left side, and details are not described herein again.

The plurality of columns are integrally connected through the cross beams 130 extending along the length direction. A height of the warehousing robot 200 is less than a height of the cross beam 130 at a bottommost end of the rack unit 100.

In this way, when walking on the support surface, the warehousing robot 200 may pass through the rack unit 100 from an area below the suspended columns 120 along a width direction of the rack unit 100, shortening a path for the warehousing robot 200 to move between different aisles 300. It may be understood that, in some other embodiments, the rack unit 100 may only be provided with the landing column 110 without the suspended column 120, and the warehousing robot 200 may pass through the rack unit 100 from an area between two adjacent landing columns 110.

Support plates 140 are further arranged between the landing columns 110 on the left and right sides and between the suspended columns 120 on the left and right sides of the rack unit 100. Two support plates 140 opposite to each other in a front-rear direction together support a material box 400. The landing column 110 and the suspended column 120 are connected to a plurality of support plates 140 arranged in the height direction, to place a plurality of material boxes 400 in the height direction. The warehousing robot 200 may move the material box 400 out from the left side or the right side of the rack unit 100, or place the material box 400 on the support plate 140 from the left side or the right side.

The landing column 110 and the suspended column 120 are respectively further provided with climbing guide rails 160. The climbing guide rails 160 are arranged along the height direction of the rack unit 100. When located in the aisle 300, the warehousing robot 200 can climb up and down along the climbing guide rail 160, to pick or place the material boxes 400 of different heights.

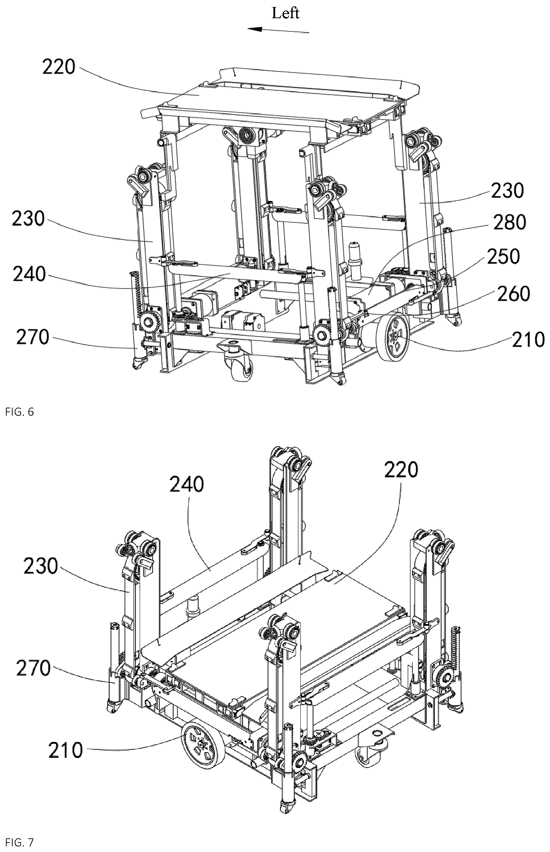

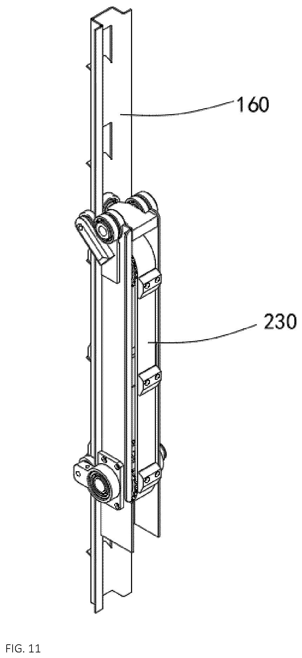

Referring to FIG. 6 to FIG. 13, a warehousing robot 200 implemented in this application includes a mobile base 210, a handling device 220, and a climbing assembly.

The mobile base 210 is configured to drive the warehousing robot 200 to move on a support surface. The mobile base 210 includes a driving wheel 211 and a driving motor 212. The driving motor 212 is configured to drive the driving wheel 211 to rotate on the support surface. In the shown example, two driving wheels 211 are arranged oppositely on left and right sides of a walking direction of the warehousing robot 200, and idle wheels are arranged on front and rear ends of the walking direction of the warehousing robot 200. In some embodiments, the walking direction of the warehousing robot 200 is changed by means of differential rotation of the driving wheels 211. The handling device 220 is configured to retrieve a storage object from a target storage location of the rack unit 100 or place a storage object on a target storage location of the rack unit 100. The storage object may be, but is not limited to, a material box 400 shown in the figure.

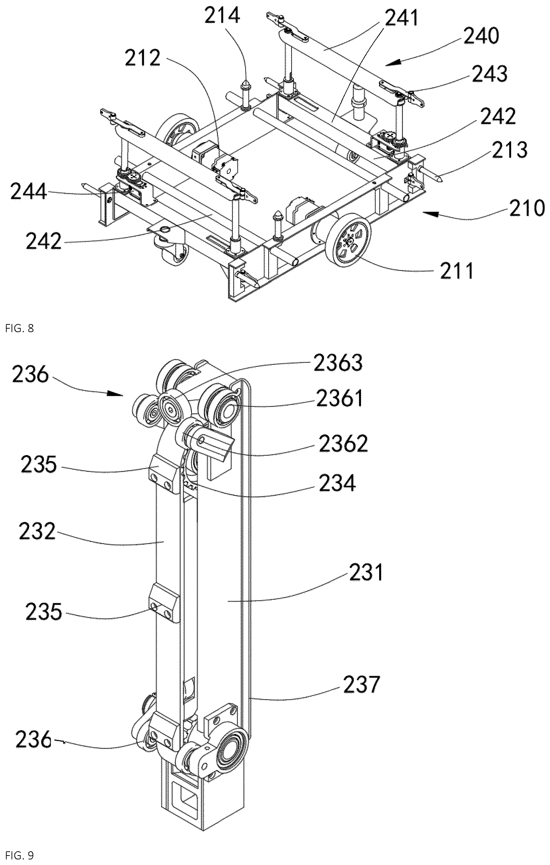

The climbing assembly includes a climbing module 230 and a climbing driving device 280. Referring to FIG. 9 to FIG. 12, the climbing module 230 includes an upright frame 231 and a first synchronization belt 232. The upright frame 231 is arranged on the mobile base 210. The first synchronization belt 232 is arranged on the upright frame 231 and capable of rotating relative to the upright frame 231. The climbing driving device 280 is configured to drive the first synchronization belt 232 to rotate.

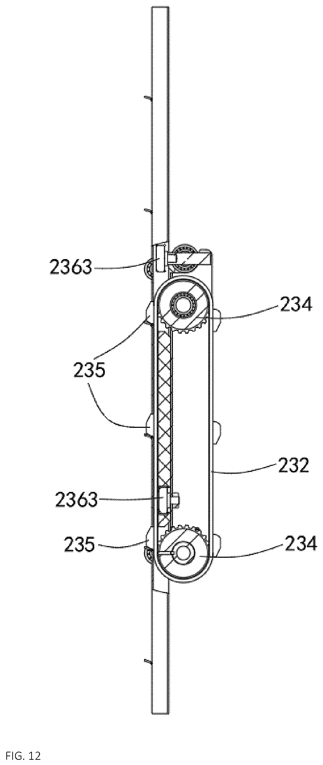

Referring to FIG. 12, two climbing synchronization wheels 234 may be arranged on the upright frame 231, and the two climbing synchronization wheels 234 are arranged vertically. The climbing synchronization wheel 234 may rotate relative to the upright frame 231. When the climbing synchronization wheel 234 rotates, the first synchronization belt 232 is driven to rotate. The climbing driving device 280 is configured to drive at least one climbing synchronization wheel 234 to rotate, to control the first synchronization belt 232 to rotate. The climbing driving device 280 may be a motor or a combination of a motor and a decelerator.

A plurality of protrusions 235 are arranged on the first synchronization belt 232, and the plurality of protrusions 235 are arranged at intervals along an outer periphery of the first synchronization belt 232. The protrusion 235 can abut against the rack unit 100, for example, abut against the climbing guide rail 160 of the rack unit 100, to drive the warehousing robot 200 to ascend or descend along with rotation of the first synchronization belt 232 along the height direction of the rack unit 100.

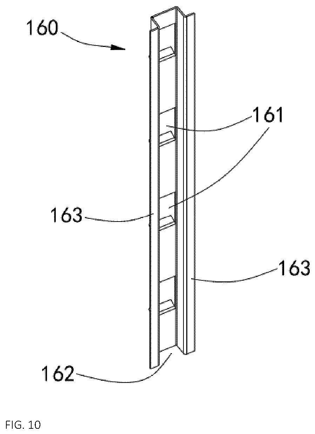

When the warehousing robot 200 needs to be ascended or descended, the first synchronization belt 232 may rotate vertically along the climbing guide rail 160. Referring to FIG. 10 to FIG. 12, the climbing guide rail 160 defines a plurality of slots 161 arranged in the height direction. When the first synchronization belt 232 rotates along the climbing guide rail 160, the protrusion 235 cooperates with the slot 161. The slot 161 is abutted with the protrusion 235 and has an upward force on the protrusion 235, to support the warehousing robot 200 so that the warehousing robot can be ascended or descended. The slot 161 may be a notch or a groove. In an embodiment, the protrusion 235 of the first synchronization belt 232 is a toothed block, and the slot 161 on the climbing guide rail 160 has a slope that matches with the toothed block.

It may be understood that, in some other embodiments, the rack unit 100 may not be provided with the climbing guide rail, and the slot 161 is directly arranged on the landing column 110 and/or the suspended column 120, so that the warehousing robot 200 can directly climb the rack unit 100 through the columns.

When the first synchronization belt 232 rotates along the height direction of the climbing guide rail 160, the warehousing robot 200 could be driven to ascend or descend, by the engagement of the protrusion 235 on the first synchronization belt 232 and the climbing guide rail 160 of the rack unit 100. A distance between adjacent protrusions 235 is much larger than a teeth distance of a gear or a chain wheel, and has a relatively low requirement on precision. Therefore, this manner of climbing and driving the warehousing robot 200 without using a chain wheel or a gear, avoiding a problem that when the warehousing robot 200 is docked with the rack unit 100, different chain wheels or gears are not meshed at the same time, and consequently, a height misalignment occurs. Such a manner of driving through the first synchronization belt 232 has better compatibility, and even in a case in which the support surface is uneven, the warehousing robot 200 can be ensured to ascend or descend smoothly.

In addition, costs of driving by using a gear and a gear rack are high. Corresponding guide rails are usually need to be designed together when a chain is used, and costs are relatively high. Using the climbing manner in this embodiment of this application can not only reduce costs, but also ensure smooth climbing.

In the embodiment shown in the figure, the climbing assembly has four climbing modules 230, and there are two climbing modules 230, respectively, at left and right sides of the walking direction of the mobile base 210. In this way, when the warehousing robot 200 climbs, two climbing modules 230 on the left side climb along the rack unit 100 on the left side of the aisle 300, and two climbing modules 230 on the right side climb along the rack unit 100 on the right side of the aisle 300, so that the warehousing robot 200 is more smoothly ascended or descended.

In the embodiment shown in the figure, the rack unit 100 includes a landing column and a suspended column. Both the landing column and the suspended column are provided with the plurality of slots 161.

In some other embodiments, the rack unit 100 includes a landing column, and the landing column is provided with the plurality of slots 161. The rack unit 100 does not include a suspended column. Alternatively, the rack unit 100 includes a suspended column, and the suspended column is not provided with the slot 161.

In some other embodiments, the rack unit 100 includes a landing column and a suspended column. The suspended column is provided with the plurality of slots 161, and the landing column is not provided with the slot 161.

Referring to FIG. 9 to FIG. 12, in this embodiment of this application, the climbing module 230 further includes a climbing guide wheel set 236 arranged on the upright frame 231, and configured to guide climbing of the climbing module 230. In this embodiment, the climbing guide wheel set 236 is configured to enable the first synchronization belt 232 to rotate in close proximity to the rack unit 100, for example, rotate in close proximity to the climbing guide rail 160 of the rack unit 100 during ascending or descending of the warehousing robot 200, to ensure that the warehousing robot 200 is ascended or descended along the height direction, thereby preventing deviation.

The climbing module 230 includes two climbing guide wheel sets 236 arranged at two ends of the first synchronization belt 232 in the height direction. The climbing guide wheel set 236 at the upper end is used as an example for description below. The climbing guide wheel set 236 at the lower end may have a similar structure to the climbing guide wheel set 236 at the upper end, and details are not described again. The climbing guide wheel set 236 includes a first guide wheel 2361 and a second guide wheel 2362. The first guide wheel 2361 and the second guide wheel 2362 are rotatably mounted on the upright frame 231. During ascending or descending of the warehousing robot 200, the first guide wheel 2361 and the second guide wheel 2362 are configured to grip a climbing positioning wall of the climbing guide rail 160 of the rack unit 100, and rolling along the climbing guide rail 160.

In the example shown in the figure, each of the two sides of the upright frame 231 is provided with a pair of the first guide wheel 2361 and the second guide wheel 2362. The shape of the climbing guide rail 160 may be U-shaped, resembling the Chinese character " 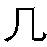 ". The climbing guide rail 160 has a groove 162 extending along the height direction and edges 163 extending from an opening of the groove 162 to two sides. The plurality of slots 161 are arranged in a bottom wall of the groove 162, and the protrusion 235 of the first synchronization belt 232 fits with the slot 161 in the groove 162. Rotation axes of the first guide wheel 2361 and the second guide wheel 2362 are arranged along a width direction of the groove 162, and two pairs of the first guide wheel 2361 and the second guide wheel 2362 respectively grip edges 163 of two sides of the climbing guide rail 160. The climbing guide wheel set 236 is further provided with a third guide wheel 2363. The third guide wheel 2363 is rotatably mounted on the upright frame 231, and a rotation axis of the third guide wheel 2362 extends along a depth direction of the groove 162. During ascending or descending of the warehousing robot 200, the third guide wheel 2363 is located inside the groove 162 of the climbing guide rail 160, and can roll along a side wall of the groove 162 of the climbing guide rai 160I. In this way, when the climbing module 230 moves vertically along the climbing guide rail 160, each guide wheel rolls on the climbing guide rail 160 to reduce a friction force between the climbing module 230 and the climbing guide rail 160, and play a position limiting role on the climbing module 230, so that the climbing module moves along the direction of the climbing guide rail 160. In this embodiment, the edge 163 extending from the opening of the groove 162 of the climbing guide rail 160 is used as the climbing positioning wall. It may be understood that, in some other embodiments, the climbing guide rail may also use another shape other than the U shape.

Referring to FIG. 6, FIG. 8, and FIG. 14, in this embodiment, the climbing assembly further includes a pushing mechanism 240 arranged along a left-right direction of the warehousing robot 200. The left side and the right side of the pushing mechanism 240 are connected to a climbing module 230 respectively, where the left side and the right side are the left and right sides of a walking direction of the warehousing robot 200. The pushing mechanism 240 is configured to drive the two climbing modules 230 to move in opposite directions along the left-right direction, to change a distance between the two climbing modules 230. In this way, when the warehousing robot 200 needs to climb, the pushing mechanism 240 synchronously extends the climbing modules 230 at the two ends, and adjusts the distance between the two climbing modules 230, to adapt to the spacing between the climbing guide rails 160 of the rack units 100 at the left and right sides of the aisle 300. When the warehousing robot 200 walks on the support surface, the pushing mechanism 240 synchronously retracts the two climbing modules 230, to avoid interference with the rack unit.

In a specific implementation, each of the front and rear ends of the warehousing robot 200, along the walking direction, is provided with a pushing mechanism 240, and is configured to respectively control the spacing between two climbing modules 230 at the front end, or control the spacing between two climbing modules 230 at the rear end. In this way, by respectively controlling the distance between the left and right climbing modules 230 by using the front and rear pushing mechanisms 240, the spacing between the pair of climbing modules at the front end could be correspondingly matched with a pair of front climbing guide rails 160, and the space between the pair of climbing modules at the rear end of the warehousing robot can be correspondingly matched with the pair of rear climbing guide rails 160. In some embodiments, two pushing mechanisms can be independently run, so that the warehousing robot 200 adapts to a difference in the distance between two pairs of front and rear climbing guide rails 160.

In this embodiment, the pushing mechanism 240 includes a telescopic arm assembly 241 and a guide rod 242. The guide rod 242 extends along the left-right direction, and is fixedly arranged on the mobile base 210. The climbing modules 230 are connected to the guide rod 242 and can slide along the guide rod 242. Specifically, the climbing module 230 may be slidably connected to the guide rod 242 by using a guide sleeve 246. Telescopic fingers 243 are provided at left and right ends of the telescopic arm assembly 241, and the telescopic fingers 243 are fixedly mounted on the corresponding upright frames 231 of the climbing modules 230. The pushing mechanism 240 further includes a telescopic driving member 244, configured to drive the telescopic fingers 243 at the left and right ends to synchronously extend or retract along the left and right direction, so that the left and right climbing modules 230 synchronously extend or retract. The guide rod 242 guides the climbing module 230 when the climbing module moves in the left-right direction.

In a specific implementation, the telescopic arm assembly 241 further includes a second synchronization belt 245, and a driving wheel and a driven wheel that are spaced apart along the left-right direction. The second synchronization belt 245 is arranged on the driving wheel and the driven wheel. The telescopic driving member 244 is configured to drive the second synchronization belt 245 to rotate through the driving wheel. Two telescopic fingers 243 at two ends of the telescopic arm assembly 241 are respectively fixedly connected to two running portions of the second synchronization belt 245, and the two running portions run in opposite directions. When the second synchronization belt 245 rotates, the two telescopic fingers 243 move in opposite directions along the left-right direction.

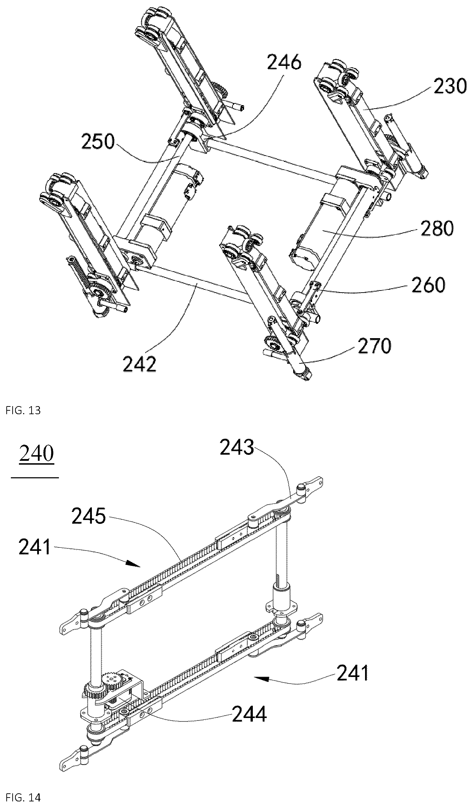

In a specific example, the telescopic arm assembly 241 has a protective sleeve, and the second synchronization belt 245 is arranged in the protective sleeve. Referring to FIG. 14, each pushing mechanism 240 has two telescopic arm assemblies 241 arranged in a height direction. Two driven wheels of upper and lower telescopic arm assemblies 241 are coaxially connected, and two driving wheels are also coaxially connected and are synchronously driven by the telescopic driving member 244. In this way, two second synchronization belts 245 synchronously rotate. By driving the two second synchronization belts 245, the climbing modules 230 at the left and right sides of the pushing mechanism 240 can be maintained to be upright in a synchronously extending or retracting process, and it is ensured that the center of the climbing modules 230 on the two sides is always located on the center plane of the warehousing robot 200. The telescopic driving member 244 is a motor, for example, may be a servo motor.

In some embodiments, the telescopic fingers 243 are elastic plates, and have an elastic deformation capability in the left-right direction. In this way, during climbing of the warehousing robot 200, if the climbing guide rails 160 are offset, resulting in a change in the spacing between the climbing guide rails 160 on the left and right sides, the telescopic fingers 243 can perform elastic deformation, so that the climbing module 230 is also offset to adapt to the change in the spacing between the climbing guide rails 160, thereby avoiding a stuck phenomenon.

Referring to FIG. 6, FIG. 13, and FIG. 15, in this embodiment, the climbing assembly further includes a connecting shaft 250 extending along the walking direction of the warehousing robot 200. A climbing module 230 is respectively connected to each of two ends of the connecting shaft 250, and the climbing module 230 can slide along the connecting shaft 250. In this way, a distance between the climbing modules 230 at the two ends of the connecting shaft 250 can be changed, so that the warehousing robot can adapt to a change in a distance between two adjacent climbing guide rails 160 on the rack unit 100. In a specific example, an adaptable spacing change is approximately ± 6 mm. The connecting shaft 250 may be a ball spline axis, and is in transmission connection with the climbing synchronization wheel 234 at the lower end of the climbing module 230. The climbing driving device 280 drives the ball spline axis to rotate by means of gear transmission, and the ball spline axis drives the climbing synchronization wheel 234 to rotate. The upright frame 231 is connected to a spline axis bush on the ball spline axis, so that the ball spline axis can rotate relative to the upright frame 231 of the climbing module 230, and the upright frame 231 can further slide along the ball spline axis. In this way, the climbing module 230 can slide along the connecting shaft 250. It may be understood that, a connecting shaft 250 is arranged at each of the left and right sides the warehousing robot 200 along the walking direction, so that the warehousing robot 200 can adapt to a spacing error between adjacent climbing guide rails 160 of the rack units 100 at the two sides of the aisle.

In this embodiment of this application, the climbing assembly further includes a synchronous reversing mechanism 260. The synchronous reversing mechanism 260 includes a third synchronization belt 261. The third synchronization belt 261 includes two running portions running in opposite directions, and the two running portions are respectively connected to the climbing modules 230 at the two ends of the connecting shaft 250. The synchronous reversing mechanism 260 ensures that the climbing modules 230 at the front and rear ends of the connecting shaft 250 can move in opposite directions along the connecting shaft 250 at the same time, and ensures that the center of the climbing modules 230 at the two ends of the connecting shaft 250 is always located on the center plane of the warehousing robot 200.

Referring to FIG. 6 to FIG. 18, the warehousing robot 200 in this embodiment of this application further includes a lifting mechanism 270. The lifting mechanism 270 can lift the warehousing robot 200 upward from a support surface, so that when the warehousing robot 200 needs to climb, the climbing module 230 is raised to a height at which the first synchronization belt 232 may be in contact with the climbing guide rail 160. Specifically, the lower end of the climbing guide rail 160 is at a certain height from the support surface. When the warehousing robot 200 walks on the support surface, the upper end of the climbing module 230 is lower than the lower end of the climbing guide rail 160. When the warehousing robot 200 needs to climb upward, the lifting mechanism 270 lifts the warehousing robot 200 upward, so that the climbing module 230 is docked with the lower end of the climbing guide rail 160.

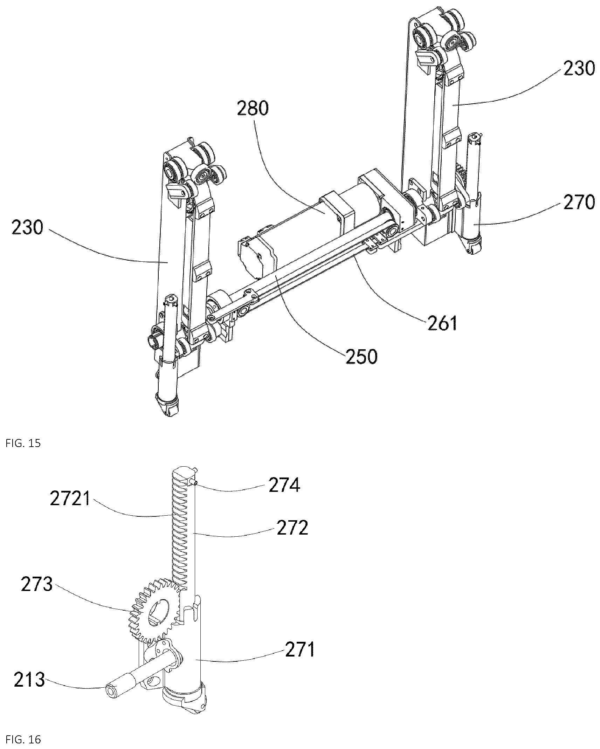

Referring to FIG. 16 to FIG. 18, the lifting mechanism 270 includes a sleeve 271 and an upright rod 272 that is slidably connected to the sleeve 271. The sleeve 271 is arranged in the upright rod 272. The upright rod 272 can slide relative to the sleeve 271 along the height direction. The sleeve 271 is fixedly connected to the upright frame 231. The climbing driving device 280 is configured to drive the upright rod 272 to slide relative to the sleeve 271 in the height direction. In a specific implementation, the lifting mechanism 270 also includes a lifting gear 273. The upper end of the upright rod 272 is provided with a gear rack 2721 arranged along the height direction. The gear rack 2721 and the lifting gear 273 can mesh with each other. The lifting gear 273 is in a coaxial transmission connection with the climbing synchronization wheel 234 at the lower end of the climbing module 230. The climbing driving device 280 can drive both the climbing synchronization wheel 234 and the lifting gear 273 to rotate. After meshing with the gear rack 2721 at the upper end of the upright rod 272, when the lifting gear 273 rotates, the upright rod 272 and the sleeve 271 can slide relative to each other. When the pushing mechanism 240 drives the climbing module 230 to move, the climbing module 230 drives the lifting mechanism 270 to move at the same time.

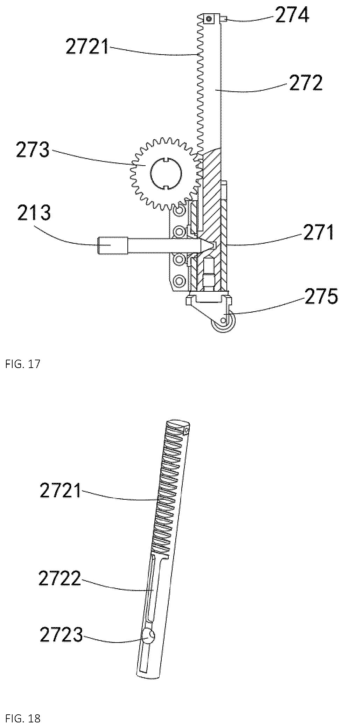

The lower end of the upright rod 272 is provided with a void avoidance slot 2722 and a positioning hole 2723. The sleeve 271 is provided with a through hole corresponding to the positioning hole 2723. A universal wheel 275 is provided on the lower end of the upright rod 272. A positioning pin 213 is provided on the mobile base 210. When the warehousing robot 200 walks on the support surface, the pushing mechanism 240 retracts the climbing module 230, so that the positioning pin 213 passes through the through hole of the sleeve 271 and is inserted into the positioning hole 2723 of the upright rod 272, as shown in states in FIG. 16 and FIG. 17. A lifting mechanism 270 is arranged on each of the four climbing modules 230 of the warehousing robot 200.

Referring to FIG. 6 to FIG. 19, a climbing process of the warehousing robot 200 is as follows.

In an initial state, the climbing modules 230 at two ends of the pushing mechanism 240 are in a retracted state, and the positioning pin 213 on the mobile base 210 passes through the through hole of the sleeve 271 and is inserted into the positioning hole 2723 of the upright rod 272. In this case, the upright rod 272 is at a highest position relative to the sleeve 271, the universal wheel 275 at the bottom of the upright rod 272 is higher than the support surface of the warehousing robot 200, and the climbing module 230 is positioned relative to the mobile base 210 by means of the positioning pin 213. An operating range of the lifting gear 273 is within a range of the void avoidance slot 2722 on the upright rod 272, and the lifting gear 273 is not engaged with the gear rack 2721, as shown in states in FIG. 16 and FIG. 17.

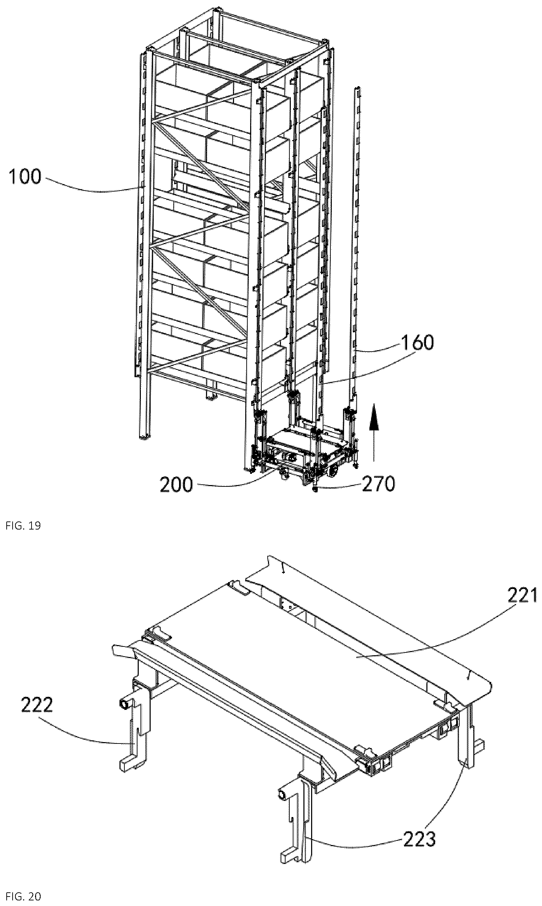

Referring to FIG. 19, when climbing is required, the climbing modules 230 at the two sides of the pushing mechanism 240 extend under the action of the pushing mechanism 240. In this case, the upright rod 272 and the sleeve 271 move away from the positioning pin 213 with the climbing module 230. The upright rod 272 moves downward relative to the sleeve 271 under the action of gravity, so that teeth of the gear rack 2721 contact with the lifting gear 273. The climbing driving device 280 drives the first synchronization belt 232 of the climbing module 230 to rotate at a current height through the climbing synchronization wheel 234 below the upright frame 231, and drives the lifting gear 273 to rotate. The lifting gear 273 enables the upright rod 272 to continue to extend downward relative to the sleeve 271 through the gear rack 2721, until the universal wheel 275 connected to the upright rod 272 descends downward onto the support surface. Then, as the lifting gear 273 is continuously driven to rotate, the lifting gear 273 rises along the gear rack of the upright rod 272, to enable the climbing guide wheel set 236 on the upright frame 231 of the climbing module 230 to rise to a height corresponding to the climbing guide rail 160. The upright frame 231 is guided into the climbing guide rail 160. The protrusion 235 on the first synchronization belt 232 of the climbing module 230 abuts and fits with the slot 161 of the climbing guide rail 160, and the warehousing robot 200 starts to climb along the climbing guide rail 160.

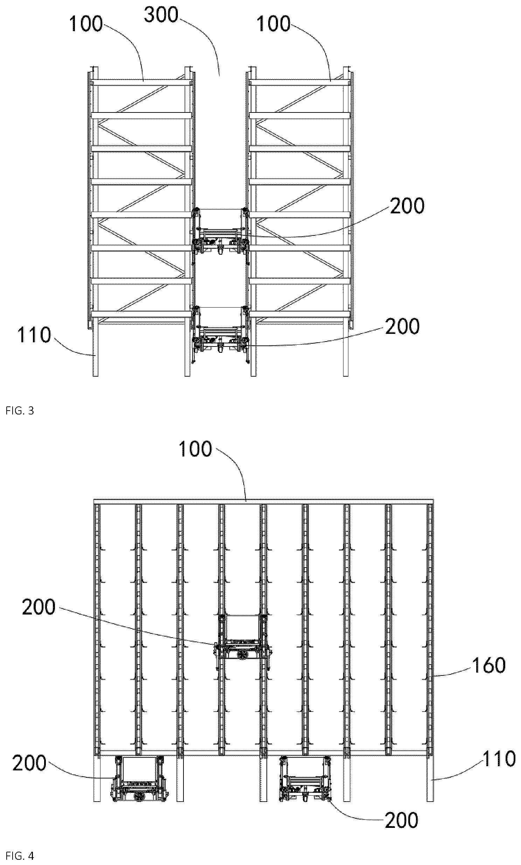

When the warehousing robot 200 continues to climb upward, the upright frame 231 of the climbing module 230 drives the sleeve 271 to rise relative to the upright rod 272, until a position limiting pin 274 at the upper end of the upright rod 272 enters the notch at the upper end of the sleeve 271. In this case, the lifting gear 273 is located above the gear rack 2721 and is completely separated from the gear rack 2721. For example, in a state in which the warehousing robot 200 climbs in FIG. 3, the climbing module 230 drives the warehousing robot 200 to entirely climb, and the universal wheel 275 climbs off the support surface with the warehousing robot 200.

A process in which the warehousing robot 200 descends is a reverse process of the upward climb. During descending, the universal wheel 275 at the lower end of the upright rod 272 first contacts the support surface, and then the upright frame 231 of the climbing module 230 continues to drive the sleeve 271 to move downward relative to the upright rod 272, and the lifting gear 273 on the climbing module 230 meshes with the gear rack 2721 on the upright rod 272. Then, rotation of the lifting gear 273 raises the upright rod 272 to be close to the highest position, and descending of the climbing module 230 enables the driving wheel 211 to fall onto the support surface. The operating range of the lifting gear 273 is within a range of the void avoidance slot 2722 on the upright rod 272. Then, the pushing mechanism 240 retracts the climbing module 230, so that the positioning pin 213 on the mobile base 210 is inserted into the positioning hole 2723 of the upright rod 272, to position the climbing module 230. In this embodiment, the positioning pin 213 and the positioning hole 2723 are both tapered. In a process in which the positioning pin 213 is inserted into the positioning hole 2723, the upright rod 272 is lifted upward to the highest position, so that the universal wheel 275 moves upward away from the support surface. In this case, the teeth of the lifting gear 273 are separated from the teeth of the gear rack 2721, and the operating range of the lifting gear 273 is within a range of the void avoidance slot 2722 on the upright rod 272.

Referring to FIG. 6, FIG. 7, and FIG. 22, the handling device 220 is connected to the upright frame 231, and can slide vertically relative to the upright frame 231. The handling device 220 is respectively connected to the upright frame 231 of each of the four climbing modules 230 and is located in an area between the four climbing modules 230. In an embodiment, when the handling device 220 descends to the bottom of the climbing module 230, the handling device 220 holds a material box 400, so that the material box 400 is located in the area between the four climbing modules 230, and the upper end of the upright frame 231 of the climbing module 230 is substantially at the same height with the upper end of the material box 400. In this way, a height of the warehousing robot 200 when transporting goods can be reduced, so that the warehousing robot 200 may drive the material box 400 to move at the bottom of the rack unit 100.

Referring to FIG. 20 to FIG. 27, in this embodiment of this application, the handling device 220 includes a fork body 221, and a first slide block 222 and a second slide block 223 respectively connected to the fork body 221. The first slide block 222 is slidably connected to the upright frame 231 at the left side of the walking direction of the mobile base 210, and the second slide block 223 is slidably connected to the upright frame 231 at the right side of the walking direction of the mobile base 210. A first slide block 222 is provided at each of front and rear ends of the left side of the fork body 221, and a second slide block 223 is provided at each of front and rear ends of the right side of the fork body 221. The first slide block 222 and the second slide block 223 can slide vertically relative to the corresponding upright frame 231 respectively. It may be understood that, in another embodiment, the first slide block 222 is arranged on the right side of the walking direction of the mobile base 210, and the second slide block 223 is arranged on the left side of the walking direction of the mobile base 210. In some embodiments, the fork body 221 is telescopic, and a telescopic direction is perpendicular to a walking direction of the warehousing robot, so that the warehousing robot can telescope to a left side and/or a right side when in an aisle, to retrieve a storage object from a rack unit or place a storage object into a rack unit.

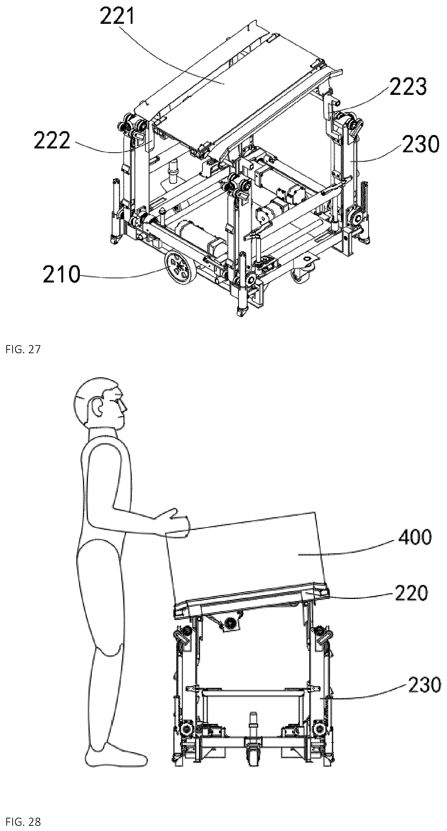

In some embodiments, when the handling device 220 ascends to an upper end of the upright frame 231, the first slide block 222 and the second slide block 223 can both rotate relative to the fork body 221, so that the fork body 221 is inclined to obtain a state as shown in FIG. 27. Referring to FIG. 28, when the fork body 221 is inclined, a material box 400 located on the fork body 221 is also inclined, so that it is convenient for an operator to directly sort materials.

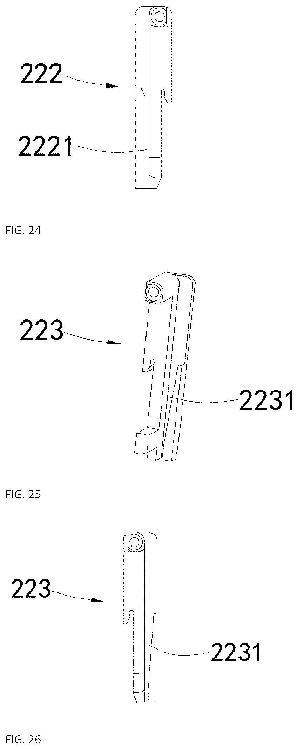

In the specific example shown in the figure, the left side and the right side of the fork body 221 are provided with shafts extending in a front-rear direction, and the first slide block and the second slide block are rotatably mounted on the shaft, to rotate relative to the fork body 221. The first slide block 222 is provided with a straight groove 2221, the second slide block 223 is provided with an inclined groove 2231, and the inclined groove 2231 is formed by a vertical surface extending in the height direction and an inclined surface at an angle relative to the height direction. Referring to FIG. 9, a guide bar 237 extending in the height direction is arranged on each upright frame 231. The straight groove 2221 and the inclined groove 2231 are respectively slidably connected to a corresponding guide bar 237 on the upright frame 231. The straight groove 2221 blocks the guide bar 237, and only slides vertically relative to the guide bar 237. The inclined groove 2231 blocks the guide bar 237, and may slide vertically relative to the guide bar 237. In addition, when the second slide block 223 is located at an upper end of the guide bar 237, the inclined groove 2231 may swing relative to the guide bar 237. Referring to FIG. 25 and FIG. 28, when the second slide block 223 is moved upward to the upper end of the guide bar 237, an increased height of the second slide block 223 is controlled to be higher than an increased height of the first slide block 222, and because the inclined groove 2231 of the second slide block 223 has an inclined surface at an angle relative to the height direction, the second slide block 223 is allowed to rotate relative to the fork body 221, so that the inclined surface is abutted with the guide bar 237, thereby enabling the fork body 221 to be in an inclined state.

Referring to FIG. 9 and FIG. 12, in this embodiment of this application, the handling device 220 is driven to ascend or descend through the first synchronization belt 232. Specifically, the first synchronization belt 232 has an outer synchronization belt portion facing towards the rack unit and an inner synchronization belt portion facing away from the rack unit. The outer synchronization belt portion and the inner synchronization belt portion are both provided with protrusions 235. The protrusions 235 on the outer synchronization belt portion are configured to cooperate with the slots 161 of the climbing guide rail 16. The first slide block 222 and the second slide block 223 can both abut against the corresponding protrusions 235 on the inner synchronization belt portion of the first synchronization belt 232. When the first synchronization belt 232 rotates, the inner protrusion 235 is abutted with the slide block and drives the slide block to slide vertically on the upright frame 231, so that the handling device 220 is enabled to slide vertically relative to the upright frame 231.

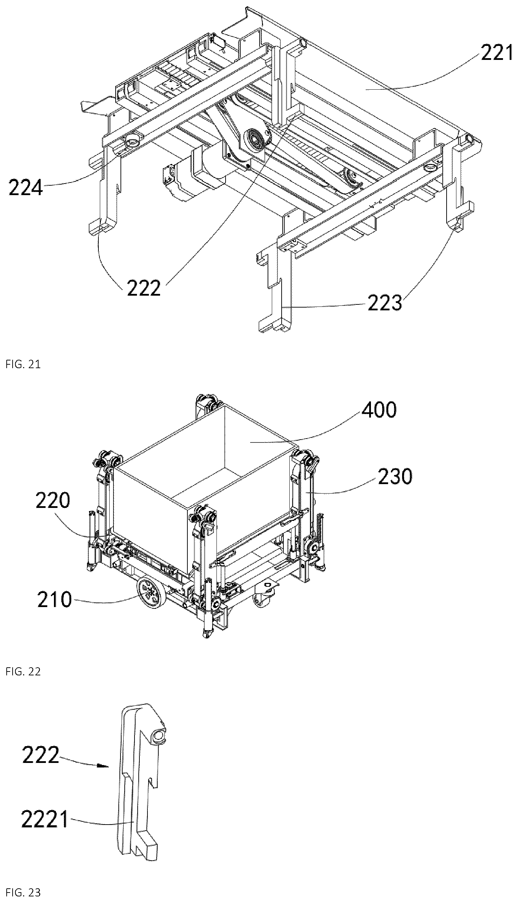

In addition, a device for positioning the handling device 220 may be further arranged at a lower end of the fork body 221 and the mobile base 210. For example, referring to FIG. 8 and FIG. 21, a fork positioning pin 214 is arranged on the mobile base 210, and a cone sleeve 224 is arranged on a lower surface of the fork body 221. When the handling device 220 is lowered to a low position, the cone sleeve 224 cooperates with the fork positioning pin 214, to position the handling device 220. In some embodiments, the warehousing robot 200 is configured to: after loading the material box to the handling device 220, keep the handling device 220 at the low position, so that the warehousing robot can carry the material box to pass at the bottom of the rack unit. In this way, the handling device 220 is positioned by cooperating with the cone sleeve 224 and the fork positioning pin 214, to ensure stability of the material box in a movement process of the warehousing robot.

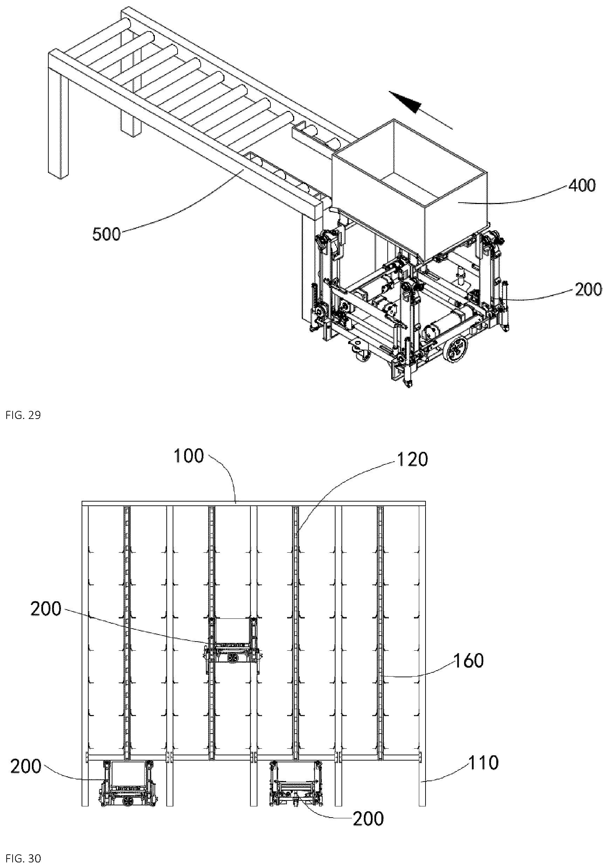

Referring to FIG. 29, the warehousing robot 200 in this embodiment of this application is further configured to be docked with a conveyor 500. The warehousing robot 200 removes the material box 400 from the rack unit 100, and moves the material box 400 to the conveyor 500. The handling device 220 raises the material box 400 to be opposite to a countertop of the conveyor 500, and then moves the material box 400 to the conveyor 500.

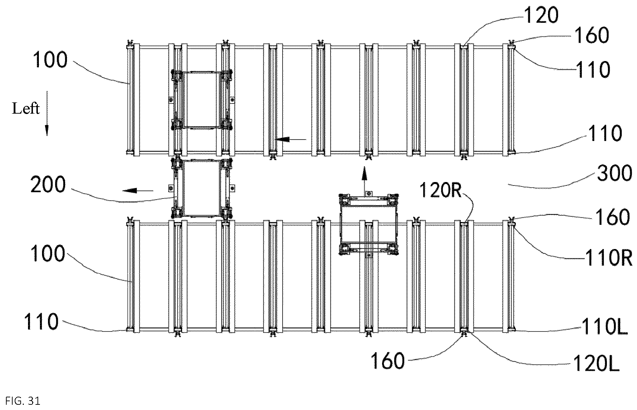

Another embodiment of this application provides another warehousing system. On one side of each rack unit 100, a climbing guide rail 160 is arranged only on a landing column 110 or a suspended column 120, and the opposite is provided on the other side. For example, referring to FIG. 30, on one side of the rack unit 100, the climbing guide rail 160 is arranged only on the suspend column 120, and the climbing guide rail 160 is not arranged on the landing column 110. On the other side of the rack unit 100, the climbing guide rail 160 is arranged only on the landing column 110, and the climbing guide rail 160 is not arranged on the suspended column 120. Referring to FIG. 31, the rack unit 100 is arranged on each of left and right sides of an aisle 300. For each rack unit 100, the climbing guide rail 160 is arranged on each suspended column 120L on the left side of the rack unit 100, while the climbing guide rail 160 is not arranged on the landing column 110L. The climbing guide rail 160 is arranged on each landing column 110R on the right side of the rack unit 100, while the climbing guide rail 160 is not arranged on the suspended column 120R (which is marked by using the rack unit 100 on the left side of the aisle 300 as an example). In this way, the climbing guide rails 160 at two sides of the aisle 300 are spaced apart and staggered. Compared with the foregoing embodiment, half of the number of the climbing guide rails 160 may be omitted, thereby reducing costs.

In some embodiments, one end of one diagonal line of the warehousing robot is provided with the climbing assembly in the foregoing embodiment, and the other end of the diagonal line is provided with no climbing assembly or is provided with another climbing assembly having a climbing mode different from that of the climbing assembly.

In some embodiments, two ends of one diagonal line of the warehousing robot are provided with the climbing assembly in the foregoing embodiment, and two ends of another diagonal line of the warehousing robot are provided with no climbing assembly or provided with another climbing assembly having a climbing mode different from that of the climbing assembly. In this case, the warehousing robot may be applicable to a case in which the climbing guide rails 160 are spaced apart and staggered at two sides of the aisle shown in FIG. 30 or FIG. 31.

In some embodiments, as shown in FIG. 6, the climbing assembly including the climbing module 230 and the climbing driving device 280 is arranged at each of two ends of each of the two diagonal lines intersecting with each other of the warehousing robot.

It may be understood that, in this embodiment, the warehousing robot 200 is ascended or descended along the climbing guide rail 160 by using only two climbing modules 230 that are on left and right diagonal lines. When being ascended or descended, the warehousing robot 200 may be inclined to some extent, but the warehousing robot can also satisfy an operating requirement.

The solutions of this application have been described in detail above with reference to the accompanying drawings. In the foregoing embodiments, the descriptions of the embodiments have respective focuses. For a part that is not described in detail in an embodiment, refer to related descriptions in other embodiments. A person skilled in the art should also know that actions and modules involved in the specification are not necessarily required in this application. In addition, it may be understood that, the steps in the method of the embodiments of this application may be sequentially adjusted, combined, or deleted according to an actual requirement, and modules in the device of the embodiments of this application may be combined, divided, or deleted according to the actual requirement.

The foregoing has described embodiments of this application. The foregoing descriptions are merely an example, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of the embodiments, practical applications, or improvements to technologies in the market, or to enable other people of ordinary skill in the art to understand the embodiments disclosed herein.

## Claims

1. A warehousing robot, comprising:
a mobile base configured to drive the warehousing robot to move on a support surface;
a handling device configured to retrieve a storage object from a target storage location of a rack unit or place a storage object on a target storage location of a rack unit; and
a climbing assembly comprising a climbing module and a climbing driving device, wherein the climbing module comprises an upright frame and a first synchronization belt, the upright frame is arranged on the mobile base, the first synchronization belt is arranged on the upright frame and is rotatable relative to the upright frame, the climbing driving device is configured to drive the first synchronization belt to rotate, the first synchronization belt is provided with a plurality of protrusions, and the plurality of protrusions are arranged at intervals along an outer periphery of the first synchronization belt, and the protrusions are configured to abut against the rack unit, to drive the warehousing robot to ascend or descend along with rotation of the first synchronization belt along a height direction of the rack unit.

2. The warehousing robot according to claim 1, wherein:
the climbing module further comprises a climbing guide wheel set arranged on the upright frame, and the climbing guide wheel set is configured to cause the first synchronization belt to rotate in close proximity to the rack unit during ascending or descending of the warehousing robot.

3. The warehousing robot according to claim 2, wherein:
the climbing guide wheel set comprises a first guide wheel and a second guide wheel, the first guide wheel and the second guide wheel are rotatably mounted on the upright frame, and the first guide wheel and the second guide wheel are configured to grip a climbing positioning wall of the rack unit and rolling along the climbing positioning wall during the ascending or descending of the warehousing robot.

4. The warehousing robot according to claim 1, wherein:
the climbing assembly further comprises a pushing mechanism, each of left and right sides of the pushing mechanism in a walking direction of the warehousing robot is connected to one climbing module, the pushing mechanism is configured to drive the two climbing modules to move in opposite directions along a left-right direction to change a distance between the two climbing modules, and the left-right direction is perpendicular to the walking direction of the warehousing robot.

5. The warehousing robot according to claim 4, wherein:
the pushing mechanism includes a telescopic driving member, a telescopic arm assembly, and a guide rod, the guide rod extends along the left-right direction and is arranged on the mobile base, the climbing modules are connected to the guide rod and is slidable along the guide rod, each of left and right ends of the telescopic arm assembly is provided with a telescopic finger, each telescopic finger is fixedly mounted on a corresponding upright frame of the climbing module, and the telescopic driving member is configured to drive the telescopic fingers at the left and right ends to synchronously extend or retract along the left-right direction.

6. The warehousing robot according to claim 5, wherein:
the telescopic arm assembly further includes a second synchronization belt, a driving wheel and a driven wheel, the driving wheel and the driven wheel are spaced apart along the left-right direction, the second synchronization belt is arranged on the driving wheel and the driven wheel, the telescopic driving member is configured to drive the second synchronization belt to rotate through the driving wheel, the two telescopic fingers at the two ends of the telescopic arm assembly are respectively fixedly connected to two running portions of the second synchronization belt, the two running portions run in opposite directions, and rotation of the second synchronization belt causes the two telescopic fingers to move in the opposite directions.

7. The warehousing robot according to claim 5, wherein:
the telescopic finger is an elastic plate having an elastic deformation capability in the left-right direction.

8. The warehousing robot according to claim 1, wherein:
the climbing assembly further comprises a connecting shaft arranged along a walking direction of the warehousing robot, each of two ends of the connecting shaft is connected to one climbing module respectively, and the climbing module is slidable along the connecting shaft.

9. The warehousing robot according to claim 8, wherein:
the climbing assembly further comprises a synchronous reversing mechanism, the synchronous reversing mechanism comprises a third synchronization belt, the third synchronization belt comprises two running portions running in opposite directions, and the two running portions are respectively connected to the climbing modules at the two ends of the connecting shaft.

10. The warehousing robot according to claim 1, further comprising a lifting mechanism, configured to raise the warehousing robot upward from the support surface.

11. The warehousing robot according to claim 10, wherein:
the lifting mechanism comprises a sleeve and an upright rod slidably connected to the sleeve, the sleeve is connected to the upright frame, and the climbing driving device is configured to drive the upright rod and the sleeve to slide relative to each other in the height direction.

12. The warehousing robot according to claim 1, wherein:
the handling device is connected to the upright frame and is slidable vertically relative to the upright frame.

13. The warehousing robot according to claim 12, wherein:
the handling device comprises a fork body, a first slide block and a second slide block, the first slide block and the second slide block are connected to the fork body; the first slide block is slidably connected to the upright frame located at one end of the mobile base, and the second slide block is slidably connected to the upright frame located at an other end of the mobile base; and
when the handling device ascends to an upper end of the upright frame, both the first slide block and the second slide block are capable of can rotating relative to the fork body, to incline the fork body.

14. The warehousing robot according to claim 13, wherein:
the first slide block is provided with a straight groove, the second slide block is provided with an inclined groove, the upright frame is provided with a guide bar extending along the height direction, and the straight groove and the inclined groove are respectively slidably connected to the corresponding guide bars.

15. The warehousing robot according to claim 13, wherein:
the first synchronization belt comprises an outer synchronization belt portion facing towards the rack unit and an inner synchronization belt portion facing away from the rack unit, the plurality of protrusions are respectively arranged on the outer synchronization belt portion and the inner synchronization belt portion, the protrusions on the outer synchronization belt portion are configured to abut against the rack unit, and the first slide block and the second slide block are both configured to abut against the corresponding protrusions on the inner synchronization belt portion of the first synchronization belt.

16. The warehousing robot according to claim 1, wherein:
one end of one diagonal line of the warehousing robot is provided with the climbing assembly, and the other end of the diagonal line is provided with another climbing assembly having a climbing mode different from that of the climbing assembly, or there is no climbing assembly provided on the other end of the diagonal line; or
two ends of one diagonal line of the warehousing robot are each provided with the climbing assembly, and two ends of another diagonal line of the warehousing robot are each provided with no climbing assembly or are each provided with another climbing assembly having a climbing mode different from that of the climbing assembly; or
two ends of each of two intersecting diagonal lines of the warehousing robot are each provided with the climbing assembly.

17. A warehousing system, comprising:
a plurality of rack units, wherein the plurality of rack units are distributed at intervals, an interval region between adjacent rack units forms an aisle, the rack unit comprises a plurality of columns distributed at intervals along a length direction of the aisle, and each of the plurality of columns has a plurality of slots arranged along a height direction of the column; and
the warehousing robot according to any one of claims 1 to 16, wherein the plurality of protrusions of the warehousing robot are configured to respectively abut against the plurality of slots when the first synchronization belt rotates along a height direction of the rack unit, to cause the warehousing robot to ascend or descend along the columns.

18. The warehousing system according to claim 17, wherein
the plurality of columns comprise a landing column, and the landing column is provided with the plurality of slots; or
the plurality of columns comprise a landing column and a suspended column, and the suspended column is provided with the plurality of slots; or
the plurality of columns comprise a landing column and a suspended column, and both the landing column and the suspended column are provided with the plurality of slots; or
the plurality of slots are arranged on a climbing guide rail on the column.

19. The warehousing system according to claim 17, wherein
the plurality of columns are integrally connected through cross beams extending along the length direction, and a height of the warehousing robot is less than a height of the cross beam at a bottommost end of the rack unit.
